# EUROPEAN PATENT SPECIFICATION

(11) **EP 1 174 285 B1**
(45) Date of publication and mention of the grant of the patent: **30.03.2005**
(21) Application number: 01202725.6
(22) Date of filing: 17.07.2001
(51) Int. Cl.: B60B 23/12

(54) **A varying-track wheel with devices for mutual-positioning of the rim and disc**
Rad mit Spurbreitenveränderung durch relative Positionierung von Felge und Scheibe
Roue à voie à écartement variable par positionnement relatif de jante et disque

(30) Priority: 19.07.2000 IT MI000427 U
(43) Date of publication of application: 23.01.2002
(73) Proprietor: TITAN ITALIA S.p.A., 40010 Crespellano (IT)
(72) Inventor: Savignac, Michel, 44042 Cento (Ferrara) (IT)
(74) Representative: Faraggiana, Vittorio, Dr. Ing.

(56) References cited:
- US-A- 4 925 248
- US-A- 5 938 291
- US-B1- 6 273 515

## Description

The present invention relates to a varying-track wheel provided with devices for a precise positioning of the rim relative to the disc.

Varying-track wheels are already known in the art, i.e. wheels in which the rim is fastened in a removable manner to the central disc by means of appropriate brackets enabling selection of the distance between the disc plane and the median plane of the rim. These wheels are used on agricultural vehicles such as farm tractors, so that a user can each time vary the vehicle track between a certain number of possible choices (eight for example), depending on requirements.

A problem of known varying-track wheels is to keep a satisfactory radial positioning between the rim and disc when the track is varied. In particular, the continuous increase in the maximum speed of farm tractors makes it increasingly more critical to vary the radial unevenness with respect to the values that are ensured at the factory where mounting of the disc on the rim is carried out by means of special equipment adapted to centre the disc relative to the rim itself.

To avoid the above problem, over a given speed (generally 40 km/h) wheels with a varying track are not used and wheels with a disc welded to the rim are employed, in which clearly the radial unevenness is constant and can be only affected by the fit backlash of the wheel with the vehicle hub.

US 5938291 A discloses a wheel according to the preamble of claim 1, comprising a disc and a rim bolted together, and a precise-positioning device consisting of centring holes in the rim and the disc, into which a dowel may be inserted.

It is an aim of the present invention to further improve/develop the precise-positioning device.

In view of the above aim, in accordance with the invention, a varying-track wheel has been conceived which comprises a rim with fastening elements projecting towards the rotation axis of the wheel and a disc peripherally secured in a removable manner to said fastening elements by means of bolts, comprising at least one device for mutual precise positioning of the disc and rim, which device is operatively disposed close to one of said fastening elements and comprises at least a first centring hole formed in the fastening element and at least a second centring hole formed in the disc periphery, said first and second holes being designed to be brought into line with each other, the precise-positioning device further comprising a dowel passing through the first and second centring holes with a minimum backlash for a mutual precise alignment of the two holes, characterized in that the dowel juts out from a plate. The plate may be secured to the wheel and/or may comprise a pair of dowels passing through a pair of centring holes, thereby improving the precise-positioning device. For better explaining the innovative principles of the present invention and the advantages it offers over the known art, a possible embodiment applying these principles will be described hereinafter with the aid of the accompanying drawings. In the drawings:
- Fig. 1 is an elevation front view of a wheel in accordance with the invention;
- Fig. 2 is a partial diagrammatic and exploded view of a connecting region between the disc and rim of the wheel shown in Fig. 1;
- Fig. 3 is a partial view sectioned along line III-III in Fig. 1;
- Fig. 4 is a front view of an element of the wheel in Fig. 1;
- Fig. 5 is a sectional view taken along line V-V in Fig. 4;
- Fig. 6 is a front view of another element of the wheel shown in Fig. 1;
- Fig. 7 is a bottom view of the element in Fig. 6;
- Fig. 8 is a partly sectioned view taken along line VIII-VIII in Fig. 6.

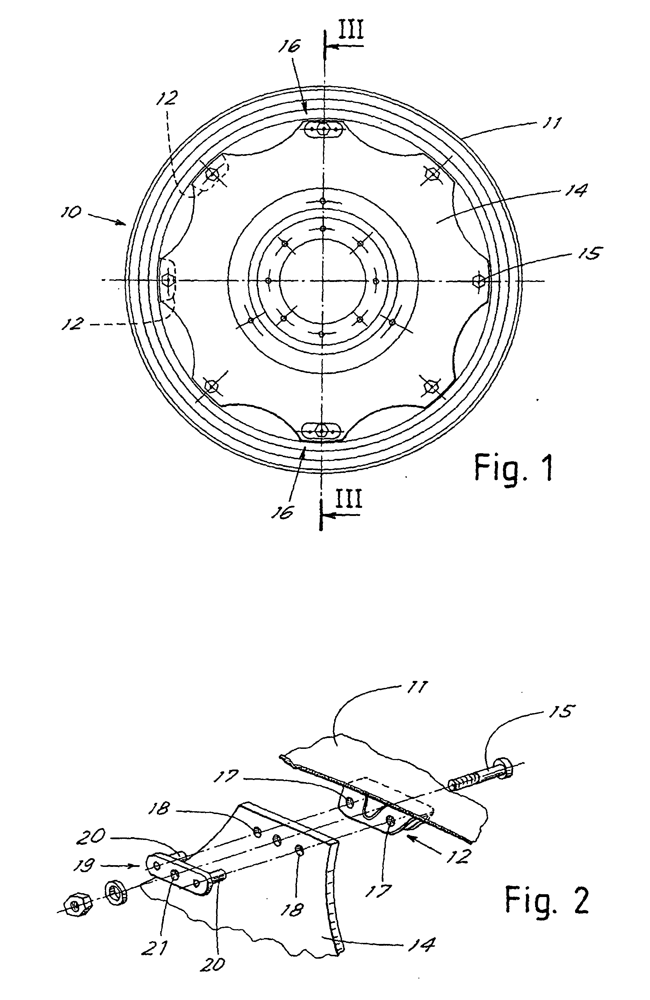

With reference to the drawings, a varying-track wheel made following the principles of the present invention and generally identified by reference numeral 10, is shown in Fig. 1.

Wheel 10 comprises a rim 11 of a substantially known configuration and adapted to externally receive a tyre (non shown). The rim 11 has fastening elements 12 on its inner face, which are spaced apart from each other along the rim circumference and project towards the rotation axis 13 of the wheel for peripheral fastening in a removable manner of a disc 14 by means of bolts 15.

Close to at least one of the fastening elements 12 the wheel comprises at least one device 16 for mutual precise positioning of the disc and rim.

As better viewed from Fig. 2, device 16 comprises at least a first centring hole 17 formed in the fastening element 12 and at least a second centring hole 18 formed in the periphery of the disc (which periphery, as clearly visible in Fig. 1, can be advantageously formed with appropriate radial arms).

As shown in Fig. 2, the first and second holes are designed to be brought into line with each other and the precise-positioning device comprises a plate 19 from which a dowel 20 juts out passing through the first and second centring holes with a minimum backlash so as to obtain the mutual precise alignment of the two holes. The dowel can be fixed to the plate by riveting.

As also visible in Fig. 2, the plate is advantageously secured to the wheel in a removable manner by means of the same fastening bolt 15 which is disposed between the fastening element 12 and disc 14. In particular, the plate has a hole 21 so that it can be passed through by the fastening bolt. Typically, the plate will be locked between the bolt head or nut and the disc surface (14).

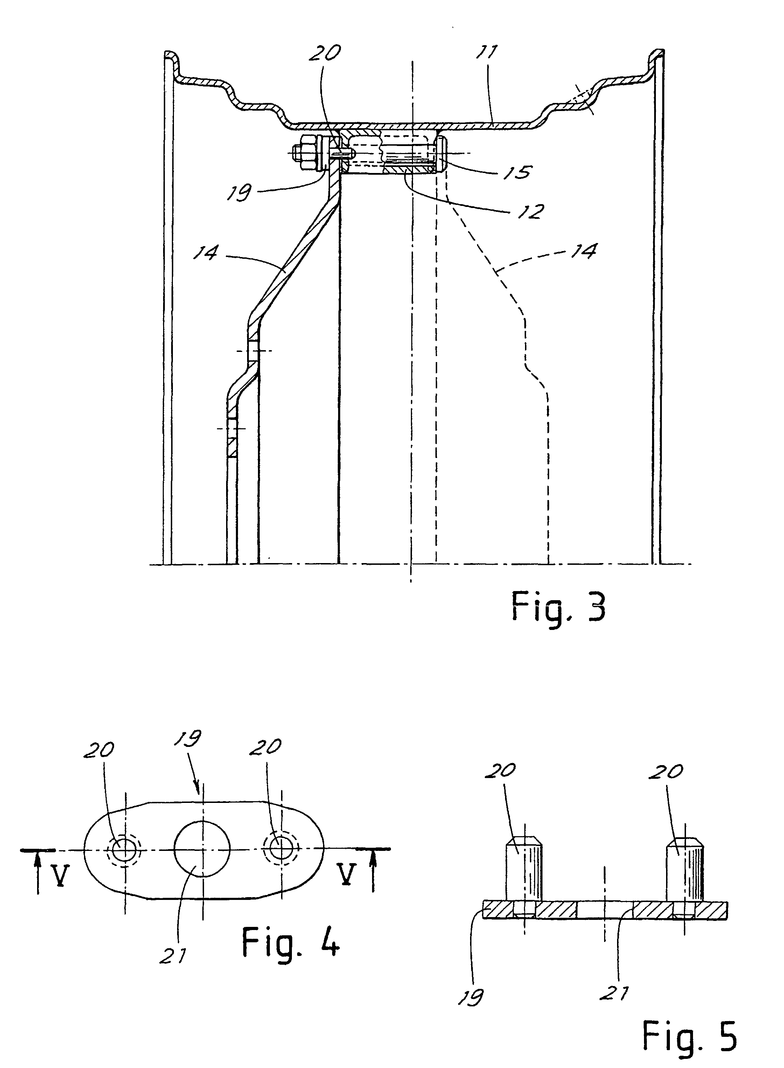

As still viewed from Fig. 2, advantageously the fastening device comprises a first pair of centring holes 17 in the fastening element 12 and a second pair of corresponding aligned holes 18 in the disc 14. In a complementary manner, the plate (as clearly shown in Figs. 4 and 5 too) has two dowels 20 disposed on two opposite sides of the through hole 21 (possibly slightly misaligned relative to a diameter of hole 21) so that each dowel 20 passes through a hole of the first pair and the aligned hole of the second pair.

It was also found particularly advantageous for the centring devices 16 to be at least two in number, disposed at opposite positions of the wheel relative to the rotation axis, as shown in Fig. 1.

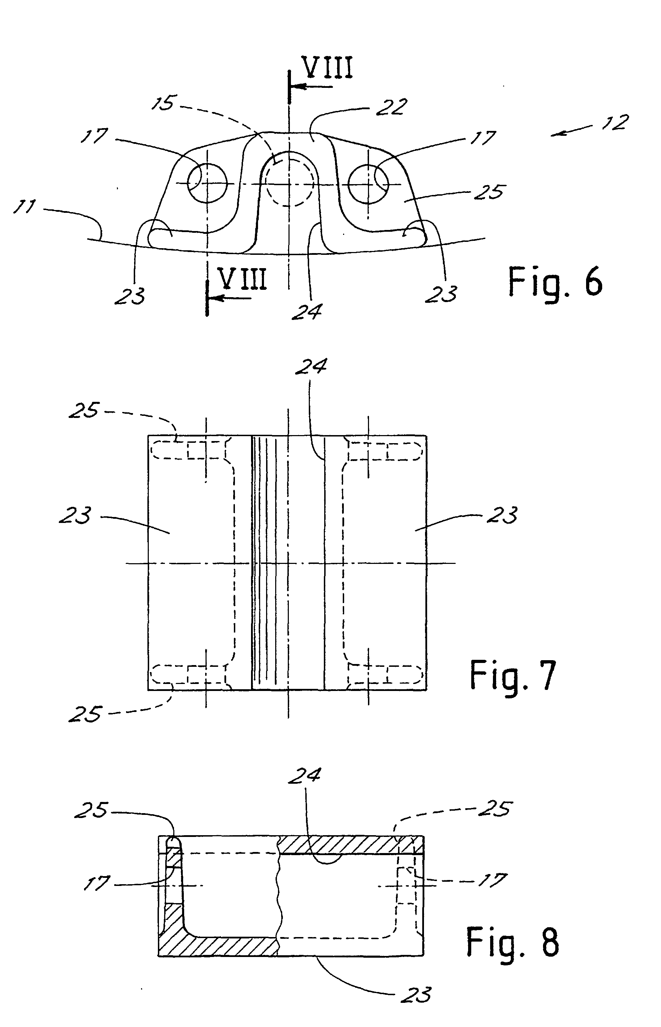

Shown in more detail in Figs. 6, 7 and 8 is a particularly advantageous embodiment of the fastening elements at least at the centring devices. As viewed from the figures, the fastening element comprises an omega-shaped bracket 22 the opposite omega arms 23 of which are connected to the inside of the rim (by welding for example). The omega loop 24 thus identifies a passage for the corresponding bolt 15 for fastening of the rim and disc. As well visible in Figs. 7 and 8, a plate 25 in which the first centring holes 17 are formed is present on each opposite face of the omega configuration. The presence of centring holes on both sides of the fastening elements allows the disc to be fixed on one or the other side of the rim, as shown in solid and chain lines in Fig. 3. The disc may also be fixed with such an orientation that its concavity is turned outwardly or inwardly of the rim. Since, in addition, the whole wheel can be mounted with one or the other face turned towards the outside of the vehicle, the possibility of mounting the wheel with eight different tracks is obtained.

The fastening elements 12 that are not close to the positioning devices 16 can be embodied as shown in Fig. 6, but possibly devoid of the unnecessary plates 25.

Each fastening element can be made of one piece construction, by casting for example.

At this point it is apparent that the intended purposes have been achieved by providing a varying-track wheel which was found adapted for use also with relatively high speeds, even higher than 50 km/h.

In use, the track change does not require particular equipment or knowledge by the user, as it is sufficient to unbolt the rim from the plate, select the orientation enabling the desired track to be obtained and bolt the rim to the plate again, by positioning the centring plate 19 to the established position.

Obviously, the above description of an embodiment applying the innovative principles of the present invention is given by way of example only and therefore must not be considered as a limitation of the scope of the invention as herein claimed. For example, the rim and plate shape can vary depending on specific requirements. The fastening elements can also be in the form of a rib or continuous element along the wheel circumference.

## Claims

1. A varying-track wheel comprising a rim (11) with fastening elements (12) projecting towards the rotation axis of the wheel and a disc (14) peripherally secured in a removable manner to said fastening elements (12) by means of bolts (15), comprising at least one device (16) for mutual precise positioning of the disc (14) and rim (11), which device is operatively disposed close to one of said fastening elements (12) and comprises at least a first centring hole (17) formed in the fastening element (12) and at least a second centring hole (18) formed in the disc (14) periphery, said first and second holes being designed to be brought into line with each other, the precise-positioning device further comprising a dowel (20) passing through the first and second centring holes with a minimum backlash for a mutual precise alignment of the two holes, **characterised in that** the dowel (20) juts out from a plate (19).

2. A wheel as claimed in claim 1, **characterised in that** the plate (19) is removably secured to the wheel by means of the same fastening bolt (15) disposed between said fastening element (12) and the disc (14).

3. A wheel as claimed in claim 2, **characterised in that** the plate (19) has a through hole (21) therein to be passed through by said fastening bolt (15).

4. A wheel as claimed in claim 3, **characterised in that** the device comprises a first pair of centring holes (17) in the fastening element (12) and a second pair of corresponding aligned holes (18) in the disc (14) and **in that** the plate (19) has two dowels (20) disposed on two opposite sides of said through hole (21), each dowel (20) passing through a hole of the first pair and the aligned hole of the second pair.

5. A wheel as claimed in claim 1, **characterised in that** the positioning devices (16) are two in number, disposed at opposite positions of the wheel relative to the rotation axis.

6. A wheel as claimed in claim 1, **characterised in that** at least at the positioning devices (16), the fastening elements (12) comprise an omega-shaped bracket (22) the omega arms (23) of said bracket being connected to the inside of the rim (11) and the omega loop (24) identifying a passage for the corresponding fastening bolt (15) between the rim and disc, on each opposite face of the omega configuration a plate (25) being present in which the first centring holes (17) are formed.

## Patentansprüche

1. Rad mit Spurbreitenveränderung umfaßt eine Felge (11) mit Verbindungselementen (12), die in Richtung der Drehachse des Rades hervorstehen, und eine Scheibe (14), die auf eine abnehmbare Weise zu den Verbindungselementen (12) mittels eines Bolzens (15) peripher gesichert ist, umfassend zumindest eine Vorrichtung (16) zur gegenseitigen präzisen Positionierung der Scheibe (14) und Felge (11), wobei die Vorrichtung nahe an einem der Verbindungselemente (12) operativ angeordnet ist, und umfaßt zumindest eine erste Zentrierbohrung (17), ausgebildet in dem Verbindungselement (12), und zumindest eine zweite Zentrierbohrung (18), ausgebildet in dem Umfang der Scheibe (14), wobei die ersten und zweiten Bohrungen entworfen sind, um aneinander ausgerichtet zu werden, die Präzis-Positionierungsvorrichtung umfaßt weiterhin einen Dübel (20), der durch die erste und zweite Zentrierbohrung läuft, mit einem minimalen Flankenspiel für eine gegenseitige präzise Ausrichtung der beiden Löcher, **dadurch gekennzeichnet dass** der Dübel (20) aus einer Platte (19) herausragt.

2. Rad nach Anspruch 1, **dadurch gekennzeichnet dass** die Platte (19) an dem Rad abnehmbar gesichert ist mittels dasselben Verbindungsbolzens (15), angeordnet zwischen dem Verbindungselement (12) und der Scheibe (14).

3. Rad nach Anspruch 2, **dadurch gekennzeichnet dass** die Platte (19) ein Durchgangsloch (21) aufweist, wodurch der Verbindungsbolzen (15) läuft.

4. Rad nach Anspruch 3, **dadurch gekennzeichnet dass** die Vorrichtung ein erstes Paar von Zentrierbohrungen (17) in dem Verbindungselement (12) und ein zweites Paar von entsprechend ausgerichteten Bohrungen (18) in der Scheibe (14) umfaßt, und dass die Platte (19) zwei Dübel (20) aufweist, die auf zwei entgegengesetzten Seiten des Durchgangslochs (21) angeordnet sind, wobei jeder Dübel (20) durch eine Bohrung des ersten Paars und die ausgerichtete Bohrung des zweiten Paars läuft.

5. Rad nach Anspruch 1, **dadurch gekennzeichnet dass** die Positionierungsvorrichtungen (16) zwei an der Zahl sind, angebracht auf gegenüberliegenden Positionen des Rades relativ zu der Rotationsachse.

6. Rad nach Anspruch 1, **dadurch gekennzeichnet dass** zumindest an den Positionierungsvorrichtungen (16) die Verbindungselemente (12) eine omega-förmige Klammer (22) umfassen, wobei die omega-förmigen Arme (23) der Klammer mit der Innenseite der Felge (11) verbunden sind und die omega-förmige Krümmung (24) einen Durchgang für den entsprechenden Verbindungsbolzen (15) zwischen der Felge und Scheibe kennzeichnet, wobei auf jeder entgegengesetzten Seite der omega-förmigen Ausführung eine Platte (25) vorliegt in welcher die ersten Zentrierbohrungen (17) ausgebildet sind.

## Revendications

1. Roue à voie à écartement variable comprenant une jante (11) avec des éléments de fixation (12) faisant saillie vers l'axe de rotation de la roue et un disque (14) fixé sur la périphérie de manière amovible sur lesdits éléments de fixation (12) au moyen de boulons (15), comprenant au moins un dispositif (16) pour un positionnement relatif précis du disque (14) et de la jante (11), le dispositif étant disposé de manière opérationnelle à proximité de l'un desdits éléments de fixation (12) et comprenant au moins un premier trou de centrage (17) formé dans l'élément de fixation (12) et au moins un deuxième trou de centrage (18) formé dans la périphérie du disque (14), lesdits premier et deuxième trous étant conçus pour être alignés l'un avec l'autre, le dispositif de positionnement précis comprenant en outre une goupille de positionnement (20) passant par les premier et deuxième trous de centrage avec un jeu minimal pour un alignement relatif précis des deux trous, **caractérisée en ce que** la goupille de positionnement (20) fait saillie depuis une plaque (19).

2. Roue selon la revendication 1, **caractérisée en ce que** la plaque (19) est fixée de manière amovible sur la roue au moyen du même boulon de fixation (15) disposé entre ledit élément de fixation (12) et le disque (14).

3. Roue selon la revendication 2, **caractérisée en ce que** la plaque (19) comprend un trou débouchant (21) par lequel ledit boulon de fixation (15) doit passer.

4. Roue selon la revendication 3, **caractérisée en ce que** le dispositif comprend une première paire de trous de centrage (17) dans l'élément de fixation (12) et une deuxième paire de trous alignés (18) correspondants dans le disque (14) et **en ce que** la plaque (19) comprend deux goupilles de positionnement (20) disposées sur les deux côtés opposés dudit trou débouchant (21), chaque goupille de positionnement (20) passant par un trou de la première paire et par le trou aligné de la deuxième paire.

5. Roue selon la revendication 1, **caractérisée en ce que** les dispositifs de positionnement (16) sont au nombre de deux, disposés dans des positions opposées de la roue par rapport à l'axe de rotation.

6. Roue selon la revendication 1, **caractérisée en ce qu'**au moins sur les dispositifs de positionnement (16), les éléments de fixation (12) comprennent un support (22) en forme d'oméga, les bras (23) du oméga dudit support étant reliés à l'intérieur de la jante (11) et la boucle (24) du oméga identifiant un passage pour le boulon de fixation (15) correspondant entre la jante et le disque, sur chaque face opposée de la configuration en oméga, une plaque (25) étant présente dans laquelle les premiers trous de centrage (17) sont formés.
